# EUROPÄISCHE PATENTSCHRIFT

(11) **EP 4 071 504 B1**
(45) Veröffentlichungstag und Bekanntmachung des Hinweises auf die Patenterteilung: **22.03.2023**
(21) Anmeldenummer: 21167729.9
(22) Anmeldetag: 09.04.2021
(51) Int. Cl.: G01S 7/481, G01S 17/42

(54) **OPTOELEKTRONISCHER SENSOR UND VERFAHREN ZUR ERFASSUNG VON OBJEKTEN**
OPTOELECTRONIC SENSOR AND METHOD FOR DETECTING OBJECTS
CAPTEUR OPTOÉLECTRONIQUE ET PROCÉDÉ DE DÉTECTION D'OBJETS

(43) Veröffentlichungstag der Anmeldung: 12.10.2022
(73) Patentinhaber: SICK AG, 79183 Waldkirch (DE)
(72) Erfinder: Brender, Tamara, 79111 Freiburg (DE); Buser, Roger, 79106 Freiburg (DE)

(56) Entgegenhaltungen:
- EP-A2- 2 827 173
- WO-A1-2015/163974
- US-A1- 2018 275 251

## Beschreibung

Die Erfindung betrifft einen optoelektronischen Sensor, insbesondere einen Laserscanner, und ein Verfahren zur Erfassung von Objekten nach dem Oberbegriff von Anspruch 1 beziehungsweise 13.

Optoelektronische Systeme und besonders Laserscanner eignen sich für Erfassungen und Abstandsmessungen, die einen großen horizontalen Winkelbereich des Messsystems erforderlich machen. In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Laserscanner ausgewertet. Aus der Winkelstellung der Ablenkeinheit wird auf die Winkellage des Objektes und aus der Lichtlaufzeit unter Verwendung der Lichtgeschwindigkeit in einem Phasen- oder Pulsverfahren zusätzlich auf die Entfernung des Objektes von dem Laserscanner geschlossen. Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen.

Neben solchen Messanwendungen werden Laserscanner auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Im Zuge der Miniaturisierung bei gleichzeitigem Wunsch nach mehr Funktionalität steht in dem Sensor immer weniger Bauraum zur Verfügung. Davon beanspruchen Prozessor, Schnittstellen und sonstige Elektronik einen erheblichen Anteil, der sich schon aus thermischen Gründen nur bedingt verringern lässt. Das führt zu einem Dilemma, da die optischen Elemente und internen Lichtwege sich ebenfalls nicht miniaturisieren lassen, wenn für die Sensorleistung maßgebliche Parameter beibehalten oder sogar verbessert werden sollen.

Tatsächlich ist aber nicht nur verlangt, die Messqualität beizubehalten, sondern trotz kleiner Bauformen noch zu verbessern. Dafür wird beispielsweise für kürzere Mess- beziehungsweise Scanzyklen die Drehgeschwindigkeit erhöht und womöglich zugleich die Winkelauflösung erhöht. Es steht dem Sensor dann nur noch sehr wenig Zeit für eine jeweilige Messung zur Verfügung. Um in dieser kurzen Messzeit noch genügend Licht einzusammeln, wird die Fläche der Empfangsoptik entsprechend groß gehalten. Die realisierbare numerische Apertur ist begrenzt, eine große Fläche ist folglich nur mit einer langen Brennweite zu erkaufen. Das stellt dann nochmals neue Herausforderungen, die Lichtwege in dem Sensor unterzubringen.

Die US 5 202 784 A offenbart ein scannendes optisches System zum Lesen von Barcodes. Das Empfangslicht wird von einem Sammelspiegel eingefangen, dann zunächst zurück auf einen Faltspiegel und von dort nochmals zurück auf den Lichtempfänger geworfen. Der Sammelspiegel ersetzt die übliche Empfangslinse, für die in einem Laserscanner deutlich mehr Erfahrungswissen bereitsteht und die bessere optische Eigenschaften verspricht. Außerdem eröffnet die doppelte Spiegelung neue Probleme und nutzt das Potential der verkürzten Strahlwege nicht aus.

Die DE 10 2009 055 988 B3 beschreibt eine Vorrichtung zum optischen Abtasten und Vermessen einer Umgebung, die statt des Sammelspiegels der US 5 202 784 A eine Sammellinse einsetzt, aber die doppelte Spiegelung nun mit zwei flachen Spiegeln beibehält. Einen entsprechenden Empfangsstrahlengang weist auch WO 2015/163974 A1 auf.

Ein Lidarsensor nach DE 10 2017 209 294 A1 setzt im Empfangsstrahlengang ein sammelndes primäres und ein streuendes sekundäres Spiegelelement ein.

In einem Laserscanner nach EP 3 246 729 B1 wird als Optik ein Sammelspiegel verwendet, der die Funktion der Empfangsoptik und Strahlfaltung in sich vereinigt. Eine derartige empfangsseitige Strahlführung wird auch in einer Ausführungsform der US 7 544 945 B2 vorgeschlagen.

Aus der EP 2 827 173 A2 ist ein Laserscanner mit rotierender Optikeinheit bekannt, in der das Empfangslicht zunächst eine Empfangslinse durchsetzt und dann von einem konkaven Spiegel auf den Lichtempfänger zurückgeworfen wird.

In der US 2018/0275251 A1 wird ein scannendes LiDAR beschrieben, das eine gemeinsame Sende- und Empfangslinse aufweist. Das von einem Drehspiegel kommende und von der gemeinsamen Linse gebündelte Empfangslicht wird durch einen flachen Spiegel seitlich zu einem Lichtempfänger umgelenkt. Das Sendelicht wird durch ein Loch des flachen Spiegels auf die gemeinsame Sende-Empfangsachse geführt.

Die DE 10 2017 205 504 A1 befasst sich mit einem optischen Scansystem, in dem eine Empfangslinse mit einem stückweise aus ebenen Flächen zusammengesetzten Hohlspiegel kombiniert wird. In einem derartigen Spiegel ist von vornherein keine hohe optische Qualität zu erwarten. Außerdem rotiert das System auf der Linsenachse, es gibt keinen Drehspiegel.

Die EP 2 759 845 A1 ergänzt einen Sammelspiegel mit einer 90°-Umlenkung. In der US 7 933 055 B2 geht der Empfangsstrahlengang über eine Sammellinse auf einen ersten Spiegel, der das Licht zurückwirft, und dann einen zweiten Spiegel für eine seitliche Umlenkung um 90° auf einen Lichtleiter. Dieses ganze Untersystem rotiert in einem ersten Winkel in einem übergeordneten Untersystem, das seinerseits eine Scanbewegung über einem zweiten Winkel ausführt. In der US 6 491 222 B1 wird ein Sammelspiegel eingesetzt, der selbst im 90°-Winkel umlenkt.

Die US 8 305 561 B2 offenbart eine distanzmessende Vorrichtung nach dem Scanprinzip, in der ein optisches System samt Empfangslinse und Spiegel rotiert, was aber im Endeffekt keine zusätzliche Umlenkung im Vergleich mit einem einfachen Drehspiegel ergibt.

Die DE 195 30 281 C2 nutzt verschiedene Spiegel, um in einem Fahrzeug einen vorderen Scanbereich mehrfach abzutasten. Das betrifft hier die Sendeseite.

Die EP 3 699 638 A1 beschreibt einen Laserscanner mit einer mitrotierenden Abschirmeinrichtung für das Sendelicht. Der Empfangsstrahlengang bleibt dabei ganz herkömmlich mit einer Empfangslinse ohne weitere Umlenkungen.

Es ist daher Aufgabe der Erfindung, einen verbesserten Aufbau eines gattungsgemäßen Sensors zu ermöglichen.

Diese Aufgabe wird durch einen optoelektronischen Sensor und ein Verfahren zur Erfassung von Objekten nach Anspruch 1 beziehungsweise 13 gelöst. Ein Lichtsender erzeugt Sendelicht und sendet es in den Überwachungsbereich aus. Das Sendelicht wird als remittiertes Sendelicht wieder empfangen, nachdem es zumindest teilweise im Überwachungsbereich von einem Objekt zurückgeworfen wurde. Es entsteht somit Empfangslicht, in dem sich das remittierte Sendelicht mit Fremdlicht überlagert. Wird kein Objekt angetastet, so bildet nur Fremdlicht das Empfangslicht. Eine Empfangsoptik führt Empfangslicht auf einen Lichtempfänger, vorzugsweise unter Bündelung oder Fokussierung des Empfangslichts, der daraus ein Empfangssignal erzeugt. Als Empfangsoptik eignet sich insbesondere eine refraktive Empfangsoptik oder Empfangslinse, wobei aus Gründen eines einfachen Aufbaus nochmals bevorzugt nur eine einzige Empfangslinse eingesetzt ist.

Mit Hilfe einer beweglichen Ablenkeinheit wird eine Scanbewegung erzeugt, vorzugsweise eine Drehbewegung, mit der das Sendelicht und das Empfangslicht periodisch in unterschiedliche Ablenkwinkel ausgesandt beziehungsweise aus unterschiedlichen Ablenkwinkeln erfasst wird. Das jeweilige Empfangssignal wird ausgewertet, um eine optisch erfassbare Information über das Objekt zu gewinnen, wie eine binäre Anwesenheitsinformation, einen Abstand, eine Position oder auch eine Farbe oder ein Remissionsvermögen.

Die Erfindung geht von dem Grundgedanken aus, den Empfangsstrahlengang zu falten, ihm also eine neue Richtung zu geben und ihn insbesondere wenigstens teilweise in sich selbst zurückzuführen. Dadurch können längere Lichtwege auf kleinerem Raum untergebracht werden. Dies bewirkt ein Faltspiegel, der im Empfangsstrahlengang des Empfangslichts der Empfangsoptik nachgeordnet ist. Somit trifft auf den Faltspiegel Empfangslicht, dass bereits von der Empfangsoptik strahlgeformt oder fokussiert ist und das dann von dem Faltspiegel zu dem Lichtempfänger umgelenkt wird.

Im Folgenden wird an einigen Stellen die Vorstellung verwendet, dass der Sensor aufrecht steht, mit einer oben angeordneten Ablenkeinheit, die zunächst nach oben hin abgestrahltes Sendelicht seitlich in den Überwachungsbereich lenkt beziehungsweise umgekehrt seitlich aus dem Überwachungsbereich eintreffendes Empfangslicht nach unten umlenkt. Dies dient lediglich der sprachlichen Vereinfachung, um Anordnungen mit den relativen Begriffen oben und unten zu beschreiben, ohne dass damit absolute Orientierungen und Anordnungen impliziert sein sollen. In dieser Vorstellung ist der Faltspiegel unterhalb der Empfangsoptik angeordnet.

Die Erfindung hat den Vorteil, dass die gewünschten optischen Eigenschaften selbst mit kleinem Bauraum umsetzbar bleiben. Für eine hohe Ortsauflösung und zur Vermeidung von unnötigem Fremdlichteintrag soll der Sichtraumwinkel klein bleiben. Das ermöglicht auch den Einsatz von hochempfindlichen Lawinenphotodioden im Geigermodus (SPAD, Single Photon Avalanche Diode, oder SiPM, Silicon Photomultiplier), die durch Fremdlicht fehlausgelöst werden und danach in einer Totzeit für Nutzlicht nicht mehr zur Verfügung stehen. Kleine Raumwinkel wiederum sind durch eine lange Brennweite vorzugsweise in Kombination mit einer Blende erzielbar, und dank des erfindungsgemäß gefalteten Empfangsstrahlengangs ist die Brennweite nicht mehr durch die Abmessungen des Sensors beziehungsweise die Gehäusehöhe limitiert. Dabei kann zugleich die Empfangsapertur zumindest beibehalten oder sogar vergrößert werden.

Der Faltspiegel bietet eine kostengünstige Lösung und lässt sich optisch hochwertig auslegen, so dass die Empfangseigenschaften nicht beeinträchtigt sind. Denn die Strahlformung obliegt jedenfalls im Wesentlichen, bei bevorzugter flacher Auslegung des Faltspiegels sogar vollständig der Empfangsoptik. Dabei erfüllt der Faltspiegel vorzugsweise sogar noch Zusatzfunktionen. Die empfangsseitige Justage ist über eine geeignete Positionierung des Faltspiegels leistbar oder jedenfalls unterstützbar. Das ergibt kürzere Justagewege, und der Faltspiegel ist für Justageschritte sehr gut zugänglich. Varianzen in der Auslegung sind mit geringem Aufwand möglich.

Die Steuer- und Auswertungseinheit ist bevorzugt dafür ausgebildet, aus einer Lichtlaufzeit zwischen Aussenden des Sendelichts und Empfangen des Empfangslichts einen Abstand des Objekts zu bestimmen. Damit entsteht ein entfernungsmessender Sensor, und es wird als Messinformation über das Objekt dessen Abstand bestimmt.

Der Faltspiegel ist bevorzugt als flacher Spiegel ausgebildet. Damit hat der Faltspiegel nur die Funktion der Strahlumlenkung, die Strahlformung obliegt der vorgeordneten Empfangsoptik und möglichen nachgeordneten weiteren optischen Elementen. Der Faltspiegel weist vorzugsweise nur eine einzige Spiegelfläche auf, wobei mehrere separate Spiegelelemente in derselben Ebene mit gemeinsamer Wirkung eines flachen Spiegels, insbesondere sehr nahe beieinanderliegende Spiegelelemente, alternativ denkbar sind. Eine weitere denkbare Variante nutzt die Vorder- und Hinterseite eines Faltspiegels mit einem gegenseitigen Abstand von beispielsweise 1-2 mm. Ein flacher Faltspiegel, beispielsweise in Form eines planen Glasspiegels, kann sehr kostengünstig eine hochwertige optische Auslegung erreichen, so dass die Faltung des Empfangsstrahlengangs praktisch keine optischen Verluste mit sich bringt.

Eine spiegelnde Fläche des Faltspiegels ist bevorzugt an den Empfangsstrahlengang angepasst, insbesondere ringförmig mit einem nicht spiegelnden Zentrum und Ringsegment entsprechend einem Schattenwurf in dem Empfangsstrahlengang. Das verringert den Fremdlichteintrag und verbessert damit das Signal-Rausch-Verhältnis. Durch die Anpassung spiegelt der Faltspiegel kein zusätzliches Fremdlicht aus Bereichen in den Lichtempfänger, in denen kein Nutzlicht auftrifft. Eine Ringform eignet sich, wenn der Lichtempfänger in einem Zentrum des Empfangsstrahlengangs sitzt. Dort ist dann einfallendes Empfangslicht abgeschattet, so dass zentral gespiegeltes Licht nur Fremdlicht sein kann. Ein entsprechender Schattenwurf kann durch den Lichtsender und Trägerelement für Lichtempfänger und/oder Lichtempfänger entstehen und in der Formgebung der spiegelnden Fläche berücksichtigt werden.

Der Faltspiegel ist bevorzugt derart ausgebildet und angeordnet, dass das Empfangslicht direkt in Richtung des Lichtempfängers gelenkt wird. Dies bedeutet, dass es nur einen einzigen Faltspiegel gibt und es nicht mehrerer Faltspiegel und damit Umlenkungen hintereinander bedarf, ehe das Empfangslicht in die neue Richtung zu dem Lichtempfänger geleitet ist. Das Empfangslicht aus dem Überwachungsbereich wird somit einmal von der Ablenkeinheit durch die Empfangsoptik zu dem Faltspiegel und dann von dem Faltspiegel zu dem Lichtempfänger gelenkt, weitere Richtungsänderungen des Empfangsstrahlengangs sind nicht vorgesehen. Denkbar ist noch, wie unten näher ausgeführt, dass das Empfangslicht nach dem Faltspiegel ein zweites Mal durch die Empfangsoptik geleitet wird. Außerdem sind zwischen Faltspiegel und Lichtempfänger optische Elemente wie Filter oder Blenden möglich, nicht aber neue Umlenkelemente oder Spiegel.

Der Faltspiegel ist bevorzugt senkrecht zu dem darauf auftreffenden Strahlengang des Empfangslichts orientiert. Dabei stehen vorzugsweise eine Linsenebene einer als Empfangslinse ausgebildeten Empfangsoptik und der Faltspiegel zueinander parallel, noch bevorzugter auch die Empfängerebene des Lichtempfängers. Das auf den Faltspiegel auftreffende Empfangslicht wird somit zurückgeworfen oder, abgesehen von Toleranzen und dergleichen, um 180° umgelenkt. Durch einen Bündelungseffekt der Empfangsoptik ist nicht der Reflexionswinkel der einzelnen Strahlen des Empfangslichts 180°, es lässt sich aber eine gemeinsame Richtung des gesamten Strahlenbündels des Empfangslichts angeben, auf die das zutrifft, beispielsweise ein mittlerer Reflexionswinkel, oder man definiert es nochmals alternativ vorzugsweise über die Empfangsoptik, deren optische Achse senkrecht zu dem Faltspiegel steht.

Der Faltspiegel ist bevorzugt schräg zu dem darauf auftreffenden Strahlengang des Empfangslichts und der Lichtempfänger seitlich angeordnet. In dieser alternativen Ausführungsform, die nicht unter den Wortlaut der Ansprüche fällt, aber als das Verständnis der Erfindung erleichternd angesehen wird, wirft der Faltspiegel das Empfangslicht nicht zurück, sondern gibt ihm zumindest eine zur Seite weisende Richtungskomponente. Dort an der Seite ist dementsprechend der Lichtempfänger angeordnet. Besonders bevorzugt ist der Faltspiegel unter 45° zu dem auftreffenden Strahlengang orientiert und lenkt das Empfangslicht damit um 90° um. Der Lichtempfänger steht dann vorzugsweise mit seiner Empfängerebene parallel zu dem auf den Faltspiegel auftreffenden Strahlengang beziehungsweise senkrecht zu einer Linsenebene einer als Empfangslinse ausgebildeten Empfangsoptik.

Der Lichtempfänger ist bevorzugt neben der Empfangsoptik und der Faltspiegel derart schräg angeordnet, dass das Empfangslicht leicht versetzt und damit auf den Lichtempfänger zurückgeworfen wird. In dieser Ausführungsform, die ebenfalls nicht unter den Wortlaut der Ansprüche fällt, aber als das Verständnis der Erfindung erleichternd angesehen wird, ist die schräge Orientierung des Faltspiegels weniger ausgeprägt und liegt näher bei 90° zu dem auftreffenden Strahlengang. Das Empfangslicht wird dadurch noch im Wesentlichen zurückgeworfen, erhält jedoch einen seitlichen Versatz. Damit können Lichtempfänger und Empfangsoptik nebeneinander angeordnet werden, insbesondere mit Empfängerebene des Lichtempfängers und einer Linsenebene einer als Empfangslinse ausgebildeten Empfangsoptik zueinander parallel oder sogar im Wesentlichen ineinander fallend.

Der Lichtempfänger ist zwischen Ablenkeinheit und Faltspiegel angeordnet Dies bedeutet, dass der Faltspiegel das Empfangslicht zurückwirft, jedenfalls mit einer Komponente in dieser Richtung. Weder die Umlenkung des Faltspiegels noch weiterer Umlenkelemente führen das Empfangslicht für den Lichtempfänger in eine Ebene jenseits des Faltspiegels. In der Vorstellung eines aufrecht stehenden Sensors lässt sich das so ausdrücken, dass der Lichtempfänger oberhalb des Faltspiegels angeordnet ist und weder der Faltspiegel selbst noch ein weiteres Umlenkelement das Empfangslicht unter den Faltspiegel führen. Das ist in vielen herkömmlichen Konstellationen anders, wo das Empfangslicht beispielsweise durch eine Öffnung des Faltspiegels auf einen Lichtempfänger unter dem Faltspiegel gelenkt wird. Die Orientierung eine Empfängerebene des Lichtempfängers oder dessen Blickrichtung wird passend zu der Orientierung des Faltspiegels gewählt. Bei einem unten angeordneten Faltspiegel, der senkrecht zu dem auftreffenden Empfangslicht steht und es zurückwirft, ist dementsprechend die Blickrichtung des Lichtempfängers nach unten.

Die Empfangsoptik ist zumindest teilweise zwischen Lichtempfänger und Faltspiegel angeordnet. Das wäre in einem herkömmlichen Sensor ohne Faltspiegel unvorstellbar, da die Empfangsoptik dann keinerlei Wirkung auf dasjenige Licht hätte, das auf den Lichtempfänger trifft. Erfindungsgemäß wirkt dagegen die Empfangsoptik sozusagen auf dem Hinweg des Empfangslichts zu dem Faltspiegel, das dann nach Reflexion auf dem Rückweg den Lichtempfänger trifft. Es ist aber keineswegs zwingend, sondern eine vorteilhafte Ausführungsform, die Empfangsoptik zumindest teilweise unterhalb der Empfängerebene anzuordnen. Das ermöglicht einen besonders kompakten Sensor. Noch bevorzugter ist die Empfangsoptik sogar vollständig unterhalb einer Empfängerebene des Lichtempfängers angeordnet, oder es bilden im Randfall die Oberkanten von Empfangsoptik und Lichtempfänger eine gemeinsame Ebene, so dass sich dann die in Höhenrichtung ausgedehntere oder dickere Empfangsoptik zum Großteil unterhalb des Lichtempfängers befindet.

Faltspiegel, Empfangsoptik und Lichtempfänger sind bevorzugt derart ausgebildet und angeordnet, dass das Empfangslicht nach Reflexion an dem Faltspiegel ein zweites Mal auf die Empfangsoptik trifft. Das Empfangslicht auf dem Hinweg zu dem Faltspiegel durchsetzt andere Bereiche der Empfangsoptik als das Empfangslicht auf dem Rückweg. Aufgrund eines Bündelungseffekts der Empfangsoptik trifft das Empfangslicht beim ersten Auftreffen auf dem Hinweg die Empfangsoptik eher außen und beim zweiten Auftreffen auf dem Rückweg eher innen.

Die Empfangsoptik weist bevorzugt eine äußere Zone für das Empfangslicht im Strahlengang hin zu dem Faltspiegel und eine innere Zone für das Empfangslicht im Strahlengang von dem Faltspiegel nach Reflexion an dem Faltspiegel auf. Die äußere Zone bildet die primäre und in vielen alternativen Ausführungsformen einzige Empfangsoptik. Die innere Zone wird in dieser Ausführungsform als sekundäre Empfangsoptik genutzt. Dazu weisen bevorzugt die äußere Zone und die innere Zone unterschiedliche optische Eigenschaften auf. Damit ist nicht der triviale Fall gemeint, dass die Empfangsoptik innen einfach frei bleibt, das wäre eine alternative Ausführungsform mit lediglich einer Öffnung und keiner inneren Zone. Vielmehr haben äußere und innere Zone unterschiedliche Krümmungen, Linseneigenschaften, Brechkraft oder dergleichen. Bei einer Empfangslinse als Empfangsoptik entsteht gleichsam ein zweilinsiges Objektiv aus äußerer Zone und innerer Zone. Die beiden Zonen werden vorzugsweise aus demselben Werkzeug hergestellt, so dass praktisch keine Zusatzkosten anfallen.

Lichtsender und Lichtempfänger sind bevorzugt derart angeordnet, insbesondere Rücken an Rücken, dass das Sendelicht in die gleiche Richtung ausgesandt wird, aus der das Empfangslicht empfangen wird. Am anschaulichsten ist der Strahlengang wiederum in der Vorstellung eines aufrecht stehenden Sensors. Dann strahlt der Lichtsender nach oben ab, und der Lichtempfänger empfängt von unten her, wobei der Faltspiegel für die erforderliche Richtungsumkehr im Empfangsstrahlengang sorgt. Rücken an Rücken bedeutet, dass Lichtsender und Lichtempfänger auf derselben Achse angeordnet sind, vorzugsweise mit geringem gegenseitigem Abstand oder zumindest nahezu einander berührend.

Der Sensor weist bevorzugt eine Leiterkarte für den Lichtempfänger mit einer insbesondere ringförmigen Aussparung für das Empfangslicht und einem Trägersteg zum Haltern des Lichtempfängers auf. Liegen Empfangsoptik, Lichtempfänger und Faltspiegel auf einer Achse, so befindet sich die Leiterkarte des Lichtempfängers im Empfangsstrahlengang. Die ringförmige Aussparung lässt das Empfangslicht durch die Leiterkarte hindurchtreten. Die Form der Aussparung entspricht vorzugsweise dem vollständigen Empfangsstrahlengang, insbesondere einer äußeren Zone einer Empfangslinse, bis auf unvermeidliche Abschattungen. Die Aussparung hat dann einen gewissen Blendeneffekt. Zum Haltern des Lichtempfängers ist ein Trägersteg durch den Ring erforderlich, der unter der Bedingung hinreichender mechanischer Stabilität und elektrischer Kontaktierung so schmal wie möglich gehalten wird, um den Abschattungseffekt zu minimieren.

Der Sensor weist bevorzugt eine gemeinsame Leiterkarte auf, auf der Lichtsender und Lichtempfänger angeordnet sind. Dadurch werden weniger Komponenten benötigt, und es wird ein kompakter Aufbau des Sensors erzielt. Lichtsender und Lichtempfänger befinden sich besonders bevorzugt auf beiden Seiten der Leiterkarte oder sind bildlich gesprochen nach oben und nach unten orientiert. Damit strahlt der Lichtsender in die Richtung ab, aus der der Lichtempfänger empfängt, was die angemessene Orientierung ist, wenn der Faltspiegel das Empfangslicht zurückwirft. Besonders bevorzugt sind Lichtsender und Lichtempfänger Rücken an Rücken mit der gemeinsamen Leiterkarte dazwischen angeordnet. Die gemeinsame Leiterkarte weist vorzugsweise die oben erläuterte Aussparung auf, wobei der Trägersteg nun auch den Lichtsender haltert. Alternative zu einer gemeinsamen Leiterkarte sind zwei zueinander parallel angeordnete Leiterkarten denkbar, die dann vorzugsweise jeweils eine entsprechende Aussparung und einen Trägersteg aufweisen.

Der Sensor weist bevorzugt einen mindestens teilweise mit der Ablenkeinheit mitbewegten Sendetubus zur Abschirmung des Sendelichts auf. Der Sendetubus umgibt gleichsam den Sendestrahlengang und verhindert, dass aus dem Sendelicht vor dem Austritt in den Überwachungsbereich Streulicht innerhalb des Sensors entsteht. Vorzugsweise ist in dem Sendetubus eine Sendeoptik angeordnet. Für einen kleinen Abstrahlwinkel beziehungsweise eine geringe Divergenz oder einen kleinen Strahlquerschnitt des Sendelichts weist die Sendeoptik eine gewisse Ausdehnung und eine im Vergleich zu herkömmlichen Lösungen große Brennweite auf. Das ist analog zu den Überlegungen des Empfangsstrahlengangs. Die Sendeoptik muss jedoch kein möglicherweise schwaches Empfangslicht auffangen, so dass die Apertur und Brennweite mit der Empfangsoptik nicht vergleichbar ist. Dennoch ist es vorteilhaft, den Lichtweg zwischen Lichtsender und Ablenkeinheit zu nutzen und die Sendeoptik daher in dem Sendetubus unterzubringen.

Die bewegliche Ablenkeinheit ist bevorzugt als Drehspiegel mit einer Spiegelfläche ausgebildet. Typischerweise steht der Drehspiegel in einem Winkel von 45°, so dass Sendelicht längs der Drehachse erzeugt beziehungsweise Empfangslicht längs der Drehachse empfangen und durch die 90°-Umlenkung mit dem Drehspiegel eine Ebene senkrecht zu der Drehachse abgetastet wird. In einer bevorzugten Ausführungsform sind eine Linsenebene einer als Empfangslinse ausgebildeten Empfangsoptik und der Faltspiegel jeweils senkrecht zu der Drehachse orientiert. Die Spiegelfläche ist bevorzugt die einzige Spiegelfläche des Drehspiegels. Es handelt sich also um kein Polygonspiegelrad. Es sind alternativ Laserscanner bekannt, in denen sich der gesamte Messkopf mit Lichtsender und Lichtempfänger dreht.

Die Ablenkeinheit, eine Sendeoptik, der Lichtsender, der Lichtempfänger, die Empfangsoptik und/oder der Faltspiegel sind bevorzugt in dieser Reihenfolge längs einer Achse angeordnet, vorzugsweise längs der Drehachse der Ablenkeinheit. In der Vorstellung eines aufrecht stehenden Sensors sind die genannten Elemente von oben nach unten aufgereiht. Zwischen Lichtsender und Lichtempfänger ist vorzugsweise je eine Leiterkarte oder eine gemeinsame Leiterkarte angeordnet, deren bevorzugte Eigenschaften oben beschrieben wurden. Ein Teilüberlapp von Empfangsoptik und Lichtempfänger in der ebenfalls oben beschriebenen Weise ist denkbar. Die genannte Anordnung und Reihenfolge gilt für beliebige Teilmengen der Elemente Ablenkeinheit, Sendeoptik, Lichtsender, Lichtempfänger, Empfangsoptik und/oder Faltspiegel. Beispielsweise ist nur der Faltspiegel ganz unten oder nur die Ablenkeinheit ganz oben angeordnet. Vorzugsweise jedoch sind alle genannten Elemente mit der Reihenfolge und Anordnung gemeint. In einem Sockel jenseits oder unterhalb des Faltspiegels sind vorzugsweise eine oder mehrere Leiterkarten für die Steuer- und Auswertungseinheit und weitere Elektronik beispielsweise für Schnittstellen des Sensors angeordnet.

Ein auf eine Wellenlänge des Sendelichts abgestimmtes Filter ist vorzugsweise zwischen Faltspiegel und Lichtempfänger, insbesondere an dem Faltspiegel oder an dem Lichtempfänger angeordnet. Dafür kann der Faltspiegel selbst entsprechend beschichtet oder ausgestaltet oder dem Faltspiegel ein Filter vorgeordnet sein. Besonders bevorzugt ist das Filter am Lichtempfänger angeordnet. Dort wird nur eine kleine Filterfläche benötigt. Durch die Faltung des Empfangsstrahlengangs und die optischen Eigenschaften der Empfangsoptik ist der Winkelbereich der Einfallswinkel der auf das Filter einfallenden Strahlen des Empfangslichts begrenzt. Deshalb ist eine enge Bandbreite des Filters möglich, mit der Fremdlicht außerhalb der Wellenlänge des Sende- oder Nutzlichts besonders wirkungsvoll ausgefiltert wird. Dem Lichtempfänger kann außerdem eine Blende vorgeordnet werden, um den Winkelbereich und Fremdlichteintrag weiter zu begrenzen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines Laserscanners mit Faltspiegel;
- Fig. 2: eine beispielhafte Darstellung des Empfangsstrahlengangs mit und ohne Faltung durch einen Faltspiegel;
- Fig. 3: eine weitere beispielhafte Darstellung des Empfangsstrahlengangs nur mit Faltung durch einen Faltspiegel;
- Fig. 4: eine beispielhafte Darstellung des Sende-und Empfangsstrahlengangs in einem Laserscanner mit Faltspiegel;
- Fig. 5: eine dreidimensionale Ansicht einer Sender-Empfänger-Baugruppe eines Laserscanners mit Faltspiegel;
- Fig. 6: eine aufgeschnittene dreidimensionale Ansicht entsprechend der Figur 5;
- Fig. 7: eine Draufsicht auf eine Leiterplatte eines Lichtempfängers;
- Fig. 8: eine schematische Ansicht einer alternativen Anordnung eines Faltspiegels, die nicht unter den Wortlaut der Ansprüche fällt; und
- Fig. 9: eine schematische Ansicht einer weiteren alternativen Anordnung eines Faltspiegels, die ebenfalls nicht unter den Wortlaut der Ansprüche fällt.

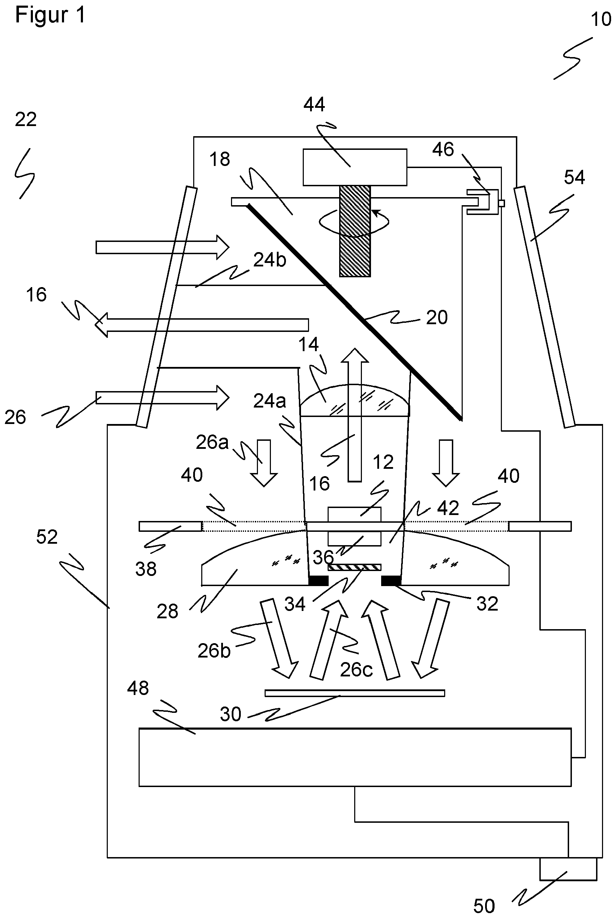

Fig. 1 zeigt eine schematische Schnittdarstellung durch einen erfindungsgemäßen optoelektronischen Sensor in einer Ausführungsform als Laserscanner 10. Ein Lichtsender 12, beispielsweise mit einer Laserlichtquelle, erzeugt mit Hilfe einer Sendeoptik 14 einen Sendelichtstrahl 16. Der Sendelichtstrahl 16 wird mittels einer Ablenkeinheit 18 mit einem flachen, in anderen Ausführungsformen auch gekrümmten Drehspiegel 20 in einen Überwachungsbereich 22 ausgesandt. Der Sendestrahlengang wird von einem ein- oder zweiteiligen Sendetubus 24a-b abgeschirmt. Zumindest der Teil 24b des Sendetubus' von der Ablenkeinheit 18 in den Überwachungsbereich 22 ist mit der Ablenkeinheit 18 mitbewegt.

Trifft der Sendelichtstrahl 16 in dem Überwachungsbereich 22 auf ein Objekt, so gelangt Empfangslicht 26 mit dem remittierten Sendelicht wieder zu dem Laserscanner 10 zurück. Das Empfangslicht 26 wird in dem Laserscanner 10 mehrfach umgelenkt und strahlgeformt und erhält zur besseren Unterscheidbarkeit jeweils ein unterschiedliches Bezugszeichen. Die Ablenkeinheit 18 lenkt das Empfangslicht 26a zunächst zu einer Empfangsoptik 28 um. Das dort strahlgeformte oder gebündelte Empfangslicht 26b fällt auf einen Faltspiegel 30. Das von dem Faltspiegel 30 zurückgeworfene Empfangslicht 26c trifft dann durch eine Blende 32 und nach Passieren eines optischen Filters 34, das auf die Wellenlänge des Lichtsenders 12 abgestimmt ist, auf einen Lichtempfänger 36. Die Reihenfolge von Blende 32 und Filter 34 kann umgekehrt werden. Der Lichtempfänger 36 wandelt das einfallende Empfangslicht 26c in ein elektrisches Empfangssignal und weist beispielsweise mindestens eine Photodiode oder für höhere Empfindlichkeit mindestens eine Lawinenphotodiode (APD) beziehungsweise eine Anordnung mit mindestens einer Einzelphotonlawinendiode (SPAD, SiPM) auf.

Wie einleitend schon diskutiert, ist für den Sendelichtstrahl 16 und den Sichtbereich des Lichtempfängers 36 ein kleiner Raumwinkel erwünscht. Das ermöglicht eine hohe Winkelauflösung, und Einzelphotonlawinendioden würden sonst zu viel Fremdlicht einfangen. Außerdem ist eine möglichst große Apertur der Empfangsoptik 28 angestrebt, um trotz kurzer Messfenster genug Nutzlicht einzusammeln.

Ein kleiner Raumwinkel wird bereits im Lichtsender 12 mit dessen Sendeoptik 14 durch eine lange Brennweite erreicht. Damit hat die Sendeoptik 14 einen vergleichsweise gro-βen Schattenwurf: wie in Figur 1 deutlich zu sehen, wird ein Teil des Empfangslichts 26 von den Elementen 12, 14, 24a-b des Sendestrahlengangs abgeschattet, der mit dem Durchmesser der Sendeoptik 14 anwächst. Nicht nur die kurzen Messzeitfenster, auch der vergrößerte Schattenwurf führen dazu, dass eine möglichst große Apertur der Empfangsoptik 28 benötigt wird.

Zugleich soll empfangsseitig der Raumwinkel klein sein. Dazu trägt die Blende 32 bei, aber allein kann sie das nicht leisten, sondern es bedarf einer vergleichsweise langen Brennweite der Empfangsoptik 28, erst recht bei der erforderlichen großen Apertur. Die zu wählenden Eigenschaften der Empfangsoptik begünstigen und begrenzen auch den Winkelfächer auf dem optischen Filter 34, das mit kleiner Fläche und engem Durchlassband ausgelegt werden kann. Der Faltspiegel 30 ermöglicht es, den Empfangsstrahlengang trotz dieser Anforderungen und der langen Brennweite in einem kompakten Laserscanner 10 begrenzter Höhe unterzubringen.

Lichtsender 12 und Lichtempfänger 36 sind in der dargestellten Ausführungsform auf einer gemeinsamen Leiterkarte 38 angeordnet, die eine Aussparung 40 für den Durchtritt des Empfangslichts 26a aufweist. Alternativ sind jeweils eigene Leiterkarten denkbar. Die Empfangsoptik 28 weist eine zentrale Öffnung 42 auf, in der Blende 32, optisches Filter 34 und der Lichtempfänger 36 untergebracht sind. In alternativen Ausführungsformen kann der Lichtempfänger 36 unterhalb der Empfangsoptik 28 angeordnet sein, die dann nicht notwendig noch eine zentrale Öffnung 42 aufweist. Statt der zentralen Öffnung 42 kann die Empfangsoptik 28 in ihrem Zentrum ein weiteres strahlformendes Element aufweisen. Insbesondere bildet dann die dargestellte Empfangsoptik 28 eine äu-ßere Zone für das Empfangslicht 26a auf dem Hinweg und das strahlformende Element eine innere Zone für das Empfangslicht 26c auf dem Rückweg nach Reflexion an dem Faltspiegel 30.

Die Ablenkeinheit 18 mit dem Drehspiegel 20 wird von einem Motor 44 in eine kontinuierliche Drehbewegung mit einer Scanfrequenz versetzt. Dadurch tastet der Sendelichtstrahl 16 während jeder Scanperiode, also einer vollständigen Umdrehung bei der Scanfrequenz, eine Ebene ab. Am Außenumfang der Ablenkeinheit 18 ist eine Winkelmesseinheit 46 angeordnet, um die jeweilige Winkelstellung der Ablenkeinheit 18 zu erfassen. Die Winkelmesseinheit 46 wird hier beispielhaft von einer Strichscheibe als Winkelmaßverkörperung und einer Gabellichtschranke als Abtastung gebildet.

Eine Steuer- und Auswertungseinheit 48 ist mit dem Lichtsender 12, dem Lichtempfänger 36, dem Motor 44 und der Winkelmesseinheit 46 verbunden, insbesondere durch Verbindungen zwischen Leiterkarten mit der jeweiligen Elektronik. Durch Bestimmen der Lichtlaufzeit zwischen Aussenden des Sendelichtstrahls 16 und Empfang von Empfangslicht 26 wird unter Verwendung der Lichtgeschwindigkeit auf die Entfernung eines angetasteten Objektes von dem Laserscanner 10 geschlossen. Die jeweilige Winkelstellung, unter welcher dabei der Sendelichtstrahl 16 ausgesandt wurde, ist der Auswertungseinheit 48 von der Winkelmesseinheit 46 bekannt.

Somit stehen nach jeder Scanperiode über den Winkel und die Entfernung zweidimensionale Polarkoordinaten der Objektpunkte in dem Überwachungsbereich 22 zur Verfügung, und entsprechende Messdaten können über eine Schnittstelle 50 übertragen werden, wobei die Schnittstelle 50 stellvertretend für eine oder mehrere Schnittstellen steht. Die Schnittstelle 50 kann umgekehrt für eine Parametrierung oder sonstigen Datenaustausch zwischen Laserscanner 10 und Außenwelt genutzt werden. Die Schnittstelle 50 kann für die Kommunikation in einem oder mehreren herkömmlichen Protokollen ausgelegt sein, wie IO-Link, Ethernet, Profibus, USB3, Bluetooth, WLAN, LTE, 5G und vielen weiteren. Bei Anwendungen in der Sicherheitstechnik kann die Schnittstelle 50 sicher ausgebildet, insbesondere ein sicherer Ausgang (OSSD, Output Signal Switching Device) für ein sicherheitsgerichtetes Abschaltsignal bei Erkennen einer Schutzfeldverletzung sein.

Der Laserscanner 10 ist in einem Gehäuse 52 untergebracht, das eine umlaufende Frontscheibe 54 insbesondere in Form einer Art transparenten Haube aufweist, die den oberen Teil des Gehäuses 52 bildet.

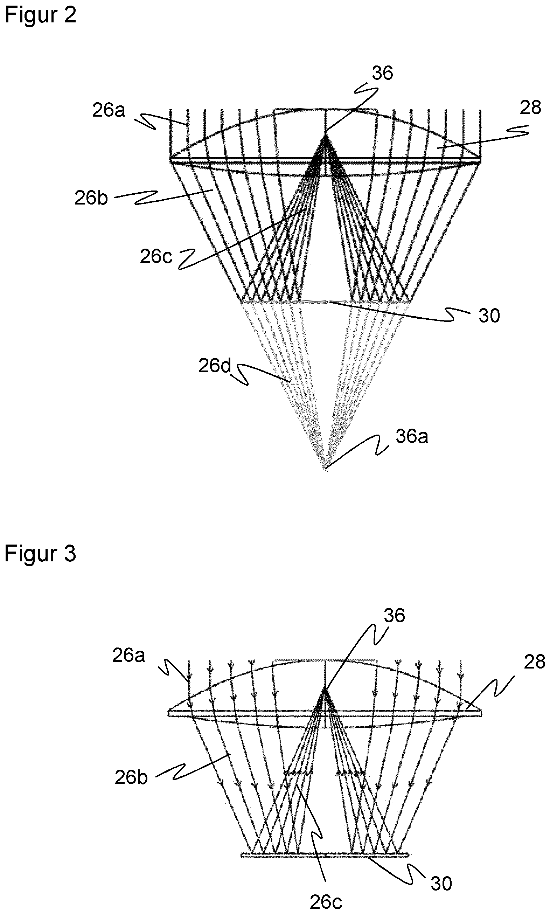

Figur 2 zeigt einen Vergleich eines herkömmlichen Empfangsstrahlengangs ohne Faltung und des erfindungsgemäßen Empfangsstrahlengangs mit Faltung durch den Faltspiegel 30. Figur 3 zeigt der besseren Übersichtlichkeit halber nochmals allein den erfindungsgemäßen Empfangsstrahlengang mit Faltung, ohne überlagerte Darstellung eines herkömmlichen Empfangsstrahlengangs.

Herkömmlich sind die Brennweiten in der Regel klein gehalten. Der Empfangsstrahlengang wird nicht gefaltet und der Lichtempfänger in etwa im Fokus 36a der Empfangsoptik 28 angeordnet. Die vergleichsweise große Divergenz des Sendelichtstrahls 16 wird über den Lichtempfänger eingefangen.

Für einen kleinen Raumwinkel wird eine längere Brennweite des Lichtsenders 12 benötigt. Die Empfangsoptik 28 muss dann ebenfalls größer werden, um die Empfangsapertur trotz des größeren Schattenwurfs der nun größeren Sendeoptik 14 mindestens zu erhalten, wenn nicht für zugleich schnellere Scanfrequenzen beziehungsweise höhere Winkelauflösung und damit kürzere Messzeitfenstern noch zu vergrößern. In Folge wird eine lange Brennweite der Empfangsoptik 28 erforderlich, die aber in einem kompakten Gehäuse 52 mit begrenzter Höhe keinen Platz findet. Dank des Faltspiegels 30 wird erfindungsgemäß der Bauraum zwischen Empfangsoptik 28 und Faltspiegel 30 doppelt genutzt, so dass der Empfangsstrahlengang trotz der längeren Brennweite untergebracht wird. Damit ist Fokussieren unter einem geringeren Winkel möglich, d.h. ein geringerer Winkelfächer, der die Auslegung eines optischen Filters 34 mit kleinen Abmessungen und engem Durchlassband erlaubt.

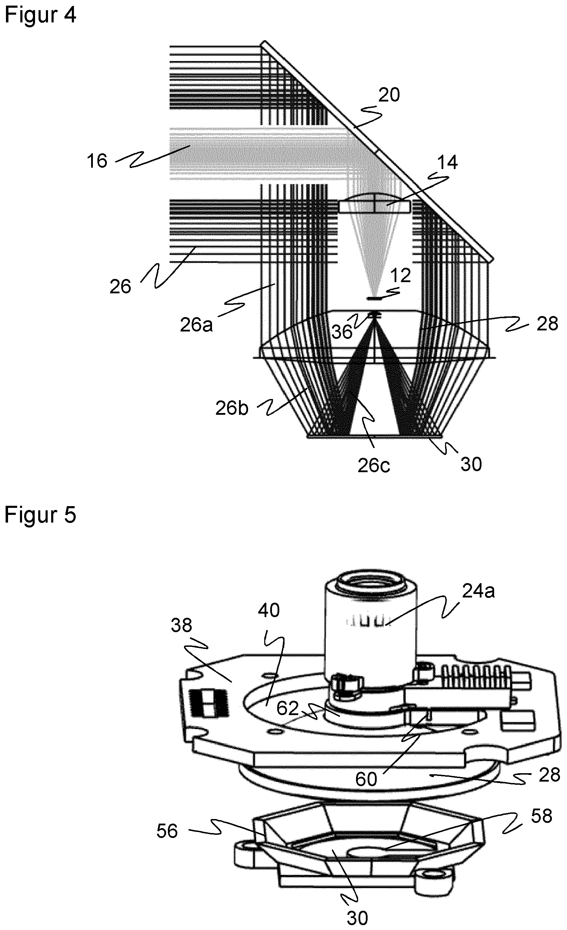

Figur 4 zeigt den Sende- und Empfangsstrahlengang in einem Laserscanner mit gefaltetem Strahlengang. Die einzelnen Elemente und Strahlabschnitte wurden bereits erläutert. Es ist gut erkennbar, dass der Sendestrahlengang zentral innerhalb des Empfangsstrahlengangs verläuft. Einerseits kann deshalb der Sendestrahlengang durch den Sendetubus 24a-b wirkungsvoll abgeschirmt werden. Andererseits schattet der Sendestrahlengang den zentralen Bereich des Empfangsstrahlengangs ab, und das umso mehr, je größer der Strahldurchmesser wird, unter anderem bedingt durch die Abmessungen der Sendeoptik 14 und damit indirekt deren Brennweite und Raumwinkel. Der Faltspiegel 30 erlaubt einen kompakten Aufbau trotz Empfangsoptik 28 mit großem Durchmesser und verlängerter Brennweite.

In Figur 4 ist die Empfangsoptik 28 ohne zentrale Öffnung 42 gezeigt. Dies kann als darstellungsbedingte Vereinfachung verstanden werden. Es ist aber auch möglich, statt der zentralen Öffnung 42 eine optisch wirksame innere Zone vorzusehen. Das von dem Faltspiegel 30 zurückkehrende Empfangslicht 26c durchsetzt in der inneren Zone ein zweites Mal die Empfangsoptik 28, nachdem bereits auf dem Hinweg das Empfangslicht 26a von der äußeren Zone der Empfangsoptik 28 gebündelt wurde. Insbesondere können äußere Zone und innere Zone praktisch als zwei Linsen aus demselben Werkzeug hergestellt werden. Diese Doppelfunktion eröffnet mehr Freiheitsgrade für die Optimierung der Empfangsoptik ähnlich einem zweilinsigen Objektiv. Zusätzliche Freiheitsgrade bietet der Faltspiegel 30, der zwar vorzugsweise plan oder flach ausgebildet ist, prinzipiell aber durch insgesamt oder bereichsweise sphärische, parabolische, asphärische und auch Freiformkrümmungen zu den Abbildungseigenschaften der Empfangsoptik 28 beitragen kann.

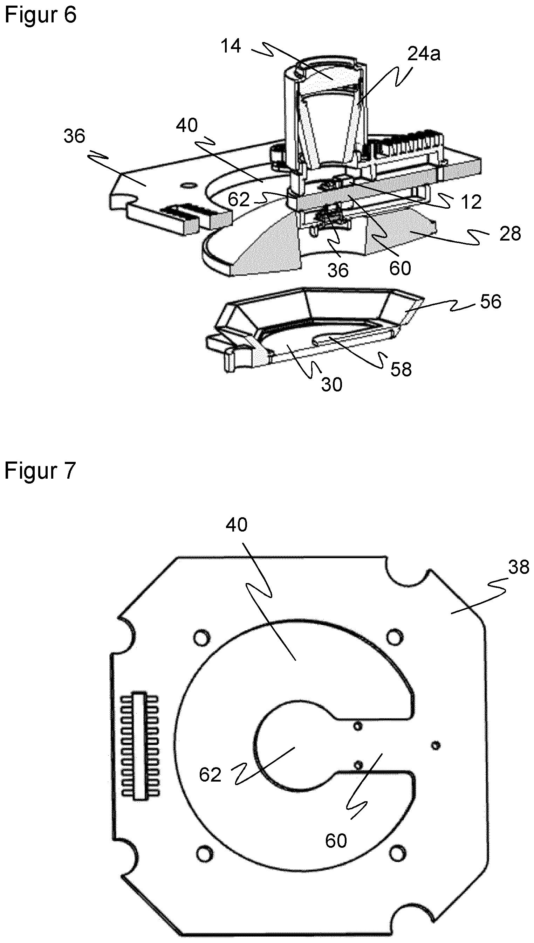

Die Figuren 5 und 6 zeigen eine Sender-Empfänger-Baugruppe in einer dreidimensionalen Ansicht beziehungsweise einer Schnittansicht. Der Faltspiegel 30 ist in einem Spiegelhalter 56 angeordnet, der sich zur Abschirmung nach oben bis zu der Empfangsoptik 28 oder der Leiterkarte 38 fortsetzen kann. Ein als planer Oberflächenspiegel aus Glas realisierter Faltspiegel 30 verringert nur minimal die optische Güte des Empfangssystems. Alternativ ist eine Herstellung aus Kunststoff in einem Teil mit dem Spiegelhalter 56 denkbar, womit ein Herstellungs-, Justage- und Montageschritt entfällt.

Der Faltspiegel 30 kann mit spektral filternden Eigenschaften in Anpassung an eine Wellenlänge des Lichtsenders 12 ausgestattet werden, sei es durch Beschichtungen, Strukturierungen oder ein Filterelement. Damit wird dann das optische Filter 34 ersetzt oder ergänzt. Ferner ist vorteilhaft, die spiegelnden Bereiche genau an den Empfangsstrahlengang anzupassen, um einen unnötigen Fremdlichteintrag zu vermeiden. Dazu entspricht einmal eine äußere Form der spiegelnden Fläche dem Außenumfang des Bündels des Empfangslichts 26b. Weiterhin wird vorzugsweise ein ohnehin abgeschatteter Bereich 58 mit einem zentralen Bereich und einem Ringsegment, auf den kein Empfangslicht 26b auftreffen kann, nicht spiegelnd ausgebildet.

Die Abschattung und die Ausgestaltung der ringförmigen Aussparung 40 für den Durchtritt des Empfangslichts 26a ist in den dreidimensionalen Darstellungen der Figuren 5 und 6 gut zu erkennen. Ergänzend zeigt die Figur 7 eine Draufsicht auf die Leiterkarte 38. In die Aussparung 40 ragt ein Trägersteg 60 mit einem sich wieder etwas verbreiternden Zentrum 62 für den Lichtempfänger 36. Aus der Form der Aussparung 40 mit Trägersteg 60 und Zentrum 62 ergibt sich die Form des abgeschatteten Bereichs 58, wo der Faltspiegel 30 vorzugsweise maskiert beziehungsweise nicht spiegelnd ausgebildet ist. Je nach Ausführungsform ist die Leiterkarte 38 eine gemeinsame Leiterkarte, so dass auf der Rückseite des Lichtempfängers 36 der Lichtsender 12 ebenfalls auf dem Zentrum 62 angeordnet ist, oder es sind zwei Leiterkarten für Lichtempfänger 36 und Lichtsender 12 mit entsprechender Geometrie vorgesehen.

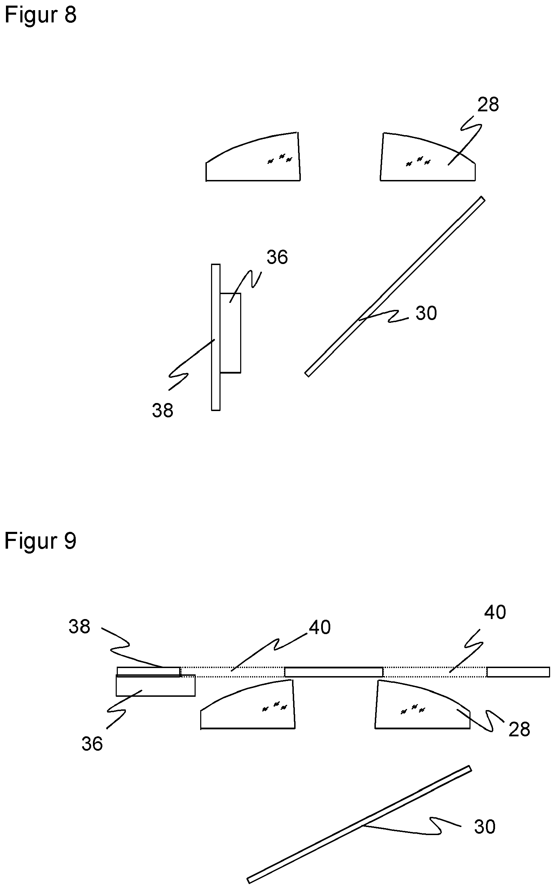

Die in Figur 8 und Figur 9 gezeigten alternativen Anordnungen fallen nicht unter den Wortlaut der Ansprüche, werden aber als das Verständnis der Erfindung erleichternd angesehen.

Figur 8 zeigt schematisch eine alternative Anordnung des Faltspiegels 30. Statt wie bisher parallel zu der Empfangsoptik 28 oder senkrecht zu dem einfallenden Empfangslicht 26b steht der Faltspiegel 30 nun schräg. Das Empfangslicht 26b wird nicht mehr zurückgeworfen, sondern seitlich umgelenktes Empfangslicht 26c erzeugt. Der Lichtempfänger 36 wird dementsprechend seitlich angeordnet und schräg orientiert. Bevorzugt ist der Faltspiegel 30 in einem Winkel von 45° angeordnet, so dass der Lichtempfänger 36 nun senkrecht statt wie bisher parallel zur Ebene der Empfangsoptik 28 steht.

Figur 9 zeigt schematisch eine weitere alternative Anordnung des Faltspiegels 30. Wiederum steht der Faltspiegel 30 schräg, nun aber in einem vergleichsweise kleinen Winkel. Das Empfangslicht 26b wird nun wieder im Wesentlichen zurückgeworfen. Allerdings kehrt das zurückgeworfene Empfangslicht 26c nicht in sich zurück, sondern erfährt eine zusätzliche seitliche Umlenkung. Der Lichtempfänger 36 sitzt nun entsprechend dem durch die seitliche Umlenkung erzeugten Versatz neben der Empfangsoptik 28, ist aber vorzugsweise weiterhin nach unten ausgerichtet wie in den früheren, unter Bezugnahme auf die Figuren 1-7 beschriebenen Ausführungsformen.

## Patentansprüche

1. Optoelektronischer Sensor (10), insbesondere Laserscanner, zur Erfassung von Objekten in einem Überwachungsbereich (22), der einen Lichtsender (12) zum Aussenden von Sendelicht (16), einen Lichtempfänger (36) zum Erzeugen eines Empfangssignals aus Empfangslicht (26) aus dem Überwachungsbereich (22), eine Empfangsoptik (28), insbesondere Empfangslinse, zum Bündeln des Empfangslichts (26c) auf den Lichtempfänger (36), eine bewegliche Ablenkeinheit (18, 20) zur periodischen Ablenkung des Sendelichts (16) und des Empfangslichts (26) und eine Steuer- und Auswertungseinheit (48) zur Erfassung von Informationen über Objekte in dem Überwachungsbereich (22) anhand des Empfangssignals aufweist, wobei der Sensor (10) weiterhin einen der Empfangsoptik (28) in dem Empfangsstrahlengang des Empfangslichts (26) nachgeordneten Faltspiegel (30) aufweist, um das Empfangslicht (26b-c) auf den Lichtempfänger (36) zu lenken und wobei der Lichtempfänger (36) zwischen Ablenkeinheit (18, 20) und Faltspiegel (30) angeordnet ist,
**dadurch gekennzeichnet,**
**dass** die Empfangsoptik (28) zumindest teilweise zwischen einer Empfängerebene des Lichtempfängers (36) und dem Faltspiegel (30) angeordnet ist.

2. Sensor (10) nach Anspruch 1,
wobei der Faltspiegel (30) als flacher Spiegel ausgebildet ist.

3. Sensor (10) nach Anspruch 1 oder 2,
wobei eine spiegelnde Fläche des Faltspiegels (30) an den Empfangsstrahlengang angepasst ist, insbesondere ringförmig mit einem nicht spiegelnden Zentrum (58) und Ringsegment (58) entsprechend einem Schattenwurf in dem Empfangsstrahlengang.

4. Sensor (10) nach einem der vorhergehenden Ansprüche,
wobei der Faltspiegel (30) derart ausgebildet und angeordnet ist, dass das Empfangslicht (26c) direkt in Richtung des Lichtempfängers (36) gelenkt wird.

5. Sensor (10) nach einem der vorhergehenden Ansprüche,
wobei der Faltspiegel (30) senkrecht zu dem darauf auftreffenden Strahlengang des Empfangslichts (26b) orientiert ist.

6. Sensor (10) nach einem der vorhergehenden Ansprüche, wobei Faltspiegel (30), Empfangsoptik (28) und Lichtempfänger (36) derart ausgebildet und angeordnet sind, dass das Empfangslicht (26c) nach Reflexion an dem Faltspiegel (30) ein zweites Mal auf die Empfangsoptik (28) trifft, wobei insbesondere die Empfangsoptik (28) eine äußere Zone für das Empfangslicht (26a) im Strahlengang hin zu dem Faltspiegel (30) und eine innere Zone für das Empfangslicht (26c) im Strahlengang von dem Faltspiegel (30) nach Reflexion an dem Faltspiegel (30) aufweist, wobei insbesondere die äußere Zone und die innere Zone unterschiedliche optische Eigenschaften aufweisen.

7. Sensor (10) nach einem der vorhergehenden Ansprüche, wobei Lichtsender (12) und Lichtempfänger (36) derart angeordnet sind, insbesondere Rücken an Rücken, dass das Sendelicht (16) in die gleiche Richtung ausgesandt wird, aus der das Empfangslicht (26) empfangen wird.

8. Sensor (10) nach einem der vorhergehenden Ansprüche, der eine Leiterkarte (38) für den Lichtempfänger (36) mit einer insbesondere ringförmigen Aussparung (40) für das Empfangslicht (26a) und einem Trägersteg (60, 62) zum Haltern des Lichtempfängers (36) aufweist und/oder der eine gemeinsame Leiterkarte (38) aufweist, auf der Lichtsender (12) und Lichtempfänger (36) angeordnet sind, insbesondere auf beiden Seiten der Leiterkarte (38).

9. Sensor (10) nach einem der vorhergehenden Ansprüche, der einen mindestens teilweise mit der Ablenkeinheit (18, 20) mitbewegten Sendetubus (24a-b) zur Abschirmung des Sendelichts (16) aufweist, in dem insbesondere eine Sendeoptik (14) des Lichtsenders (12) angeordnet ist.

10. Sensor (10) nach einem der vorhergehenden Ansprüche, wobei die bewegliche Ablenkeinheit (18) als Drehspiegel (20) mit einer Spiegelfläche ausgebildet ist.

11. Sensor (10) nach einem der vorhergehenden Ansprüche, wobei die Ablenkeinheit (18, 20), eine Sendeoptik (14), der Lichtsender (12), der Lichtempfänger (36), die Empfangsoptik (28) und/oder der Faltspiegel (30) in dieser Reihenfolge längs einer Achse angeordnet sind.

12. Sensor (10) nach einem der vorhergehenden Ansprüche, wobei ein auf eine Wellenlänge des Sendelichts (16) abgestimmtes Filter (34) zwischen Faltspiegel (30) und Lichtempfänger (36), insbesondere an dem Faltspiegel (30) oder an dem Lichtempfänger (36) angeordnet ist.

13. Verfahren zur Erfassung von Objekten in einem Überwachungsbereich (22), bei dem Sendelicht (16) ausgesandt, mit Hilfe einer beweglichen Ablenkeinheit (18, 20) periodisch abgelenkt, nach Remission an dem Objekt als Empfangslicht (26) wieder empfangen, in einer Empfangsoptik (28), insbesondere Empfangslinse, strahlgeformt und von einem Lichtempfänger (36) in ein Empfangssignal gewandelt wird, um aus dem Empfangssignal eine Objektinformation zu erzeugen, wobei das von der Empfangsoptik (28) strahlgeformte Empfangslicht (26b) von einem Faltspiegel (30) auf den Lichtempfänger (36) gelenkt wird und wobei der Lichtempfänger (36) zwischen Ablenkeinheit (18, 20) und Faltspiegel (30) angeordnet ist,
**dadurch gekennzeichnet,**
**dass** die Empfangsoptik (28) zumindest teilweise zwischen einer Empfängerebene des Lichtempfängers (36) und dem Faltspiegel (30) angeordnet ist.

## Claims

1. An optoelectronic sensor (10), in particular laser scanner, for detecting objects in a monitoring area (22), the sensor comprising a light transmitter (12) for transmitting transmitted light (16), a light receiver (36) for generating a received signal from received light (26) from the monitoring area (22), a receiving optics (28), in particular receiving lens, for focusing the received light (26c) onto the light receiver (36), a movable deflection unit (18, 20) for periodically deflecting the transmitted light (16) and the received light (26), and a control and evaluation unit (48) for detecting information about objects in the monitoring area (22) on the basis of the received signal, wherein the sensor (10) further comprises a folding mirror (30) arranged downstream of the receiving optics (28) in the receiving beam path of the received light (26) in order to direct the received light (26bc) onto the light receiver (36), and wherein the light receiver (36) is arranged between deflection unit (18, 20) and folding mirror (30),
**characterized in that** the receiving optics (28) is arranged at least partially between a receiving plane of the light receiver (36) and the folding mirror (30).

2. The sensor (10) according to claim 1,
wherein the folding mirror (30) is formed as a flat mirror.

3. The sensor (10) according to claim 1 or 2,
wherein a reflective surface of the folding mirror (30) is adapted to the receiving beam path, in particular annular with a non-reflective center (58) and ring segment (58) corresponding to a shadow cast in the receiving beam path.

4. The sensor (10) according to any of the preceding claims,
wherein the folding mirror (30) is formed and arranged such that the received light (26c) is directly directed towards the light receiver (36).

5. The sensor (10) according to any of the preceding claims,
wherein the folding mirror (30) is oriented perpendicular to the beam path of the received light (26b) impinging thereon.

6. The sensor (10) according to any of the preceding claims,
wherein folding mirror (30), receiving optics (28) and light receiver (36) are formed and arranged in such a way that the received light (26c) transmits the receiving optics (28) a second time after reflection at the folding mirror (30), wherein in particular the receiving optics (28) has an outer zone for the received light (26a) in the beam path towards the folding mirror (30) and an inner zone for the received light (26c) in the beam path from the folding mirror (30) after reflection at the folding mirror (30), wherein in particular the outer zone and the inner zone have different optical properties.

7. The sensor (10) according to any of the preceding claims,
wherein light transmitter (12) and light receiver (36) are arranged, in particular back to back, in such a way that the transmitted light (16) is transmitted in the same direction from which the received light (26) is received.

8. The sensor (10) according to any of the preceding claims,
comprising a circuit board (38) for the light receiver (36) with a recess (40), in particular an annular recess, for the receiving light (26a) and a carrier web (60, 62) for holding the light receiver (36) and/or comprising a common circuit board (38) on which the light transmitter (12) and light receiver (36) are arranged, in particular on both sides of the circuit board (38).

9. The sensor (10) according to any of the preceding claims,
comprising a transmitting tube (24a-b) for shielding the transmitted light (16) that is moved at least partially with the deflection unit (18, 20), wherein in particular a transmitting optics (14) of the light transmitter (12) is arranged.

10. The sensor (10) according to any of the preceding claims,
wherein the movable deflection unit (18) is formed as a rotating mirror (20) having a mirror surface.

11. The sensor (10) according to any of the preceding claims,
wherein the deflection unit (18, 20), a transmitting optics (14), the light transmitter (12), the light receiver (36), the receiving optics (28) and/or the folding mirror (30) are arranged in this order along an axis.

12. The sensor (10) according to any of the preceding claims,
wherein a filter (34) tuned to a wavelength of the transmitted light (16) is arranged between the folding mirror (30) and the light receiver (36), in particular on the folding mirror (30) or on the light receiver (36).

13. A method for detecting objects in a monitored area (22), wherein transmitted light (16) is transmitted, periodically deflected with the aid of a movable deflection unit (18, 20), received again as received light (26) after remission at the object, beam-shaped in a receiving optics (28), in particular receiving lens, and converted into a received signal by a light receiver (36), in order to generate object information from the received signal, wherein the received light (26b) beam-formed by the receiving optics (28) is deflected by a folding mirror (30) onto the light receiver (36) and wherein the light receiver (36) is arranged between the deflection unit (18, 20) and the folding mirror (30),
**characterized in that** the receiving optics (28) is arranged at least partially between a receiving plane of the light receiver (36) and the folding mirror (30).

## Revendications

1. Capteur optoélectronique (10), en particulier scanner laser, pour la détection d'objets dans une zone de surveillance (22), comprenant un émetteur de lumière (12) pour l'émission de lumière d'émission (16), un récepteur de lumière (36) pour générer un signal de réception à partir de la lumière de réception (26) de la zone de surveillance (22), une optique de réception (28), en particulier une lentille de réception, pour focaliser la lumière de réception (26c) sur le récepteur de lumière (36), une unité de déviation mobile (18, 20) pour la déviation périodique de la lumière d'émission (16) et de la lumière de réception (26), et une unité de commande et d'évaluation (48) pour détecter des informations sur des objets dans la zone de surveillance (22) sur la base du signal reçu, dans lequel le capteur (10) comprend en outre un miroir pliant (30) disposé en aval de l'optique de réception (28) dans le trajet du faisceau de réception de la lumière de réception (26) afin de diriger la lumière de réception (26b-c) sur le récepteur de lumière (36), et dans lequel le récepteur de lumière (36) est disposé entre l'unité de déviation (18, 20) et le miroir pliant (30),
**caractérisé en ce que** l'optique de réception (28) est disposée au moins partiellement entre un plan de réception du récepteur de lumière (36) et le miroir pliant (30).

2. Capteur (10) selon la revendication 1,
dans lequel le miroir pliant (30) est formé comme un miroir plat.

3. Capteur (10) selon la revendication 1 ou 2,
dans lequel une surface réfléchissante du miroir pliant (30) est adaptée au trajet du faisceau de réception, en particulier annulaire avec un centre non réfléchissant (58) et un segment d'anneau (58) correspondant à une ombre projetée dans le trajet du faisceau de réception.

4. Capteur (10) selon l'une des revendications précédentes,
dans lequel le miroir pliant (30) est formé et disposé de telle sorte que la lumière de réception (26c) est directement dirigée vers le récepteur de lumière (36).

5. Capteur (10) selon l'une des revendications précédentes,
dans lequel le miroir pliant (30) est orienté perpendiculairement au trajet du faisceau de la lumière de réception (26b) qui le recontre.

6. Capteur (10) selon l'une des revendications précédentes,
dans lequel le miroir pliant (30), l'optique de réception (28) et le récepteur de lumière (36) sont formés et disposés de telle sorte que la lumière reçue (26c) traverse l'optique de réception (28) une deuxième fois après réflexion sur le miroir pliant (30), dans lequel l'optique de réception (28) comprend en particulier une zone extérieure pour la lumière reçue (26a) dans le trajet du faisceau vers le miroir pliant (30) et une zone intérieure pour la lumière reçue (26c) dans le trajet du faisceau du miroir pliant (30) après réflexion sur le miroir pliant (30), dans lequel la zone extérieure et la zone intérieure en particulier comprennent des propriétés optiques différentes.

7. Capteur (10) selon l'une des revendications précédentes,
dans lequel l'émetteur de lumière (12) et le récepteur de lumière (36) sont disposes de telle sorte, notamment dos à dos, que la lumière d'émission (16) est émise dans la même direction que celle dans laquelle la lumière de réception est reçue (26).

8. Capteur (10) selon l'une des revendications précédentes,
comprenant une carte de circuit imprimé (38) pour le récepteur de lumière (36) avec un évidement (40) notamment annulaire pour la lumière de réception (26a) et une barrette de support (60, 62) pour maintenir le récepteur de lumière (36) et/ou avec une carte de circuit imprimé commune (38) sur laquelle sont disposés l'émetteur de lumière (12) et le récepteur de lumière (36), notamment des deux côtés de la carte de circuit imprimé (38).

9. Capteur (10) selon l'une des revendications précédentes,
comprenant un tube de transmission (24a- b) se déplaçant au moins partiellement avec l'unité de déviation (18, 20) pour le blindage de la lumière d'émission (16), dans lequel est disposée en particulier une optique d'émission (14) de l'émetteur de lumière (12).

10. Capteur (10) selon l'une des revendications précédentes,
dans lequel l'unité de déviation mobile (18) est conçue comme un miroir rotatif (20) avec une surface de miroir.

11. Capteur (10) selon l'une des revendications précédentes,
dans lequel l'unité de déviation (18, 20), une optique d'émission (14), l'émetteur de lumière (12), le récepteur de lumière (36), l'optique de réception (28) et/ou le miroir pliant (30) sont disposés dans cet ordre le long d'un axe.

12. Capteur (10) selon l'une des revendications précédentes,
dans lequel un filtre (34) adapté à une longueur d'onde de la lumière d'émission (16) est disposé entre le miroir pliant (30) et le récepteur de lumière (36), en particulier sur le miroir pliant (30) ou sur le récepteur de lumière (36).

13. Procédé de détection d'objets dans une zone de surveillance (22), dans lequel de la lumière d'émission (16) est émise, déviée périodiquement à l'aide d'une unité de déviation mobile (18, 20), reçue à nouveau comme lumière de réception (26) après rémission sur l'objet, mise en forme de faisceau dans une optique de réception (28), en particulier une lentille de réception, et convertie en un signal de réception par un récepteur de lumière (36), afin de générer une information d'objet à partir du signal de réception, dans lequel la lumière reçue (26b) mise en forme de faisceau par l'optique de réception (28) est déviée par un miroir pliant (30) sur le récepteur de lumière (36) et dans lequel le récepteur de lumière (36) est disposé entre l'unité de déviation (18, 20) et le miroir pliant (30),
**caractérisé en ce que** l'optique de réception (28) est disposée au moins partiellement entre un plan de réception du récepteur de lumière (36) et le miroir pliant (30).
